# FASCICULE DE BREVET EUROPEEN

(11) **EP 2 751 821 B1**
(45) Date de publication et mention de la délivrance du brevet: **27.12.2017**
(21) Numéro de dépôt: 12750790.3
(22) Date de dépôt: 29.08.2012
(51) Int. Cl.: H01G 9/06, H01G 2/04, H01G 11/82, H01G 9/145, H01G 11/58, H01G 11/84, B23K 20/12, H01G 11/08

(54) **COUVERCLE DE CONNEXION D'ENSEMBLES DE STOCKAGE D'ENERGIE**
ANSCHLUSS ZWISCHEN ZWEI ENERGIESPEICHERVORRICHTUNG
CONNECTOR PLACED BETWEEN TWO ENERGY STORAGE DEVICE

(30) Priorité: 29.08.2011 FR 1157604
(43) Date de publication de la demande: 09.07.2014
(73) Titulaire: Blue Solutions, 29500 Ergué Gabéric (FR)
(72) Inventeur: VIGNERAS, Erwan, F-29000 Quimper (FR)
(74) Mandataire: Regimbeau
(86) Numéro de dépôt international: PCT/EP2012/066732
(87) Numéro de publication internationale: WO 2013/030212

(56) Documents cités:
- WO-A1-2010/041461
- WO-A1-2011/111721
- FR-A1- 2 894 381
- FR-A1- 2 916 306
- FR-A1- 2 921 203
- JP-A- 2003 133 175
- US-A1- 2009 123 830

## Description

La présente invention concerne le domaine technique général des ensembles de stockage d'énergie électrique.

Plus particulièrement l'invention concerne le domaine des modules comprenant au moins deux ensembles de stockage d'énergie électrique.

On entend, dans le cadre de la présente invention, par « ensemble de stockage d'énergie électrique », soit un condensateur (i.e. un système passif comprenant deux électrodes et un isolant), soit un supercondensateur (i.e. un système comprenant au moins deux électrodes, un électrolyte et au moins un séparateur), soit une batterie de type batterie au lithium (i.e. un système comprenant au moins une anode, au moins une cathode et une solution d'électrolyte entre l'anode et la cathode).

### PRESENTATION GENERALE DE L'ART ANTERIEUR

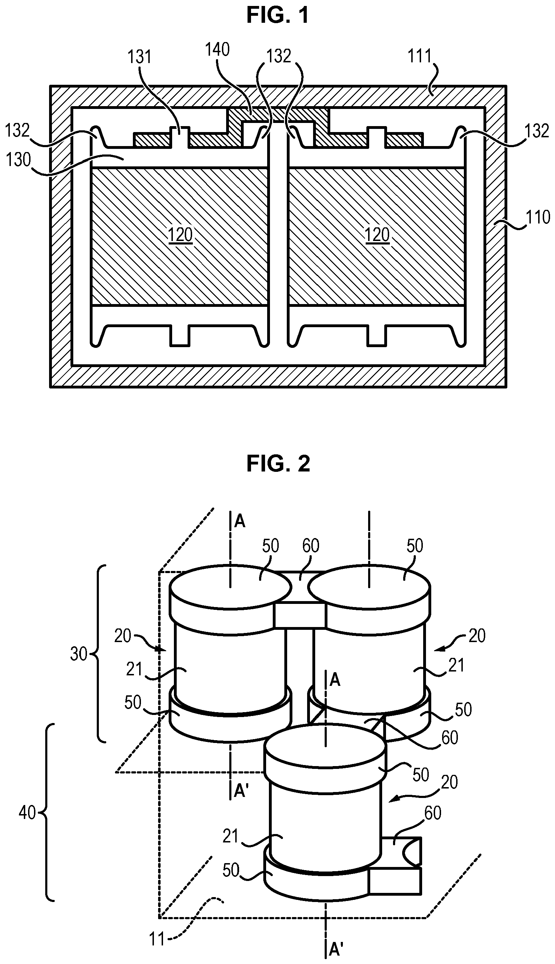

Le document FR2916306A1 divulgue un système de connexion de deux modules de stockage par deux couvercles reliés par une barrette. Le document JP2003133175A divulgue un système de connexion formé d'une barrette percée en son milieu se vissant sur le couvercle. Le document US2009/123830A1 divulgue un système de connexion de batteries comportant un capuchon et une barrette qui s'enfiche dans un connecteur placé sur le capuchon du module suivant. Le document D4 (WO2011/111721A1) divulgue un système similaire à celui de D3. Le document FR2921203A1 divulgue une barrette pour connecter électriquement deux ensembles de stockage, caractérisé en ce que la barrette et les faces des couvercles en contact avec la barrette sont planes, la barrette étant soudée sur les faces des couvercles le long de cordons de soudure. Le document WO2010/041461A1 divulgue un système de connexion formé de deux couvercles et d'une barrette. On connaît des modules tels que représentés à la figure 1, comprenant un boîtier 110 dans lequel sont disposés plusieurs ensembles de stockage d'énergie électrique 120.

Chaque ensemble de stockage est par exemple du type supercondensateur tubulaire.

Il comprend une enveloppe telle qu'un élément tubulaire, un enroulement capacitif et un électrolyte liquide à l'intérieur de l'enveloppe. L'ensemble de stockage comprend également deux couvercles pour fermer les deux extrémités de l'enveloppe. Chaque couvercle 130 est connecté électriquement à l'enroulement capacitif.

A l'intérieur du module, les ensembles de stockage 120 sont reliés deux à deux alternativement au niveau de leurs extrémités supérieures et inférieures en utilisant des barrettes de liaison 140.

Chaque couvercle 130 comprend une borne de connexion 131 apte à venir en contact avec un alésage traversant de la barrette de liaison 140.

La connexion des couvercles 130 avec la barrette de liaison 140 de deux ensembles de stockage 120 adjacents est réalisée par emmanchement en force de la barrette 140 sur les bornes de connexion 131 des couvercles 130, par soudure laser, ou autre, bord à bord entre la barrette 140 et les bornes 131, par vissage ou à l'aide de ces différentes techniques en combinaison.

Toutefois, ces techniques de connexion entre barrette et couvercle (i.e. emmanchement en force ou soudure ou vissage) nécessitent d'une part des tolérances serrées des bornes et barrettes, d'autre part un alignement précis des pièces entre elles pour assurer en finale la réalisation d'un module de qualité, d'où un coût de réalisation important.

On connaît également des modules dans lesquels les ensembles de stockage sont reliés deux à deux en utilisant une pièce longitudinale monobloc - dite bi-couvercle - formant à la fois couvercle et barrette de liaison. Une telle pièce longitudinale est notamment décrite dans le document FR 2 894 381.

L'utilisation d'un bi-couvercle pour connecter électriquement deux ensembles de stockage adjacents permet d'accroître les performances électriques et thermiques des modules. Plus précisément :
- en ce qui concerne les performances électriques, l'utilisation d'un bi-couvercle monobloc (i.e. élément en une seule pièce ayant la fonction d'un couvercle et d'une barrette) permet de diminuer la résistance interne des moyens de connexion : en effet, dans le cas d'une connexion de deux ensembles de stockage utilisant une barrette de connexion, le courant électrique est contraint de passer dans des zones de soudure de dimensions limitées ;
- en ce qui concerne les performances thermiques, l'utilisation d'un bi-couvercle monobloc permet d'augmenter la surface de contact entre les ensembles de stockage d'énergie et les parois du module, ce qui favorise la diffusion thermique vers la partie supérieure 111 du boîtier 110.

Toutefois, il n'est pas possible d'utiliser uniquement des bi-couvercles pour connecter la totalité des ensembles de stockage d'un module entre eux. En effet, cela nécessiterait d'effectuer l'imprégnation des ensembles à la fin de l'assemblage du module, puisque le bi-couvercle, qui permet cet assemblage, sert également à effectuer l'étanchéité de chacun des ensembles. Cela rend le procédé très complexe. Il est donc nécessaire, en plus de l'utilisation des bi-couvercles, d'utiliser des barrettes de connexion et des couvercles standards pour connecter électriquement les ensembles de stockage entre eux. On utilise par exemple les bi-couvercles pour connecter électriquement les faces inférieures des différents ensembles de stockage et des couvercles et barrettes illustrés à la figure 1 pour connecter électriquement les faces supérieures de ces ensembles de stockage.

L'assemblage est donc complexe du fait de la nécessité d'utiliser trois types de pièces différentes (i.e. couvercle, barrette et bi-couvercles).

Cette solution ne permet pas en outre d'optimiser la compacité du module obtenu du fait de la présence des couvercles et barrettes illustrés à la figure 1 sur une face des ensembles de stockage.

Un but de la présente invention est de proposer une solution aux problèmes d'assemblage de modules cités ci-dessus, à savoir une solution technique permettant un assemblage de modules plus compacts, cet assemblage étant plus simple à mettre en oeuvre que les solutions de l'art antérieur.

### PRESENTATION DE L'INVENTION

A cet effet on prévoit un couvercle destiné à coiffer un élément tubulaire d'un premier ensemble de stockage d'énergie électrique, le couvercle comprenant une paroi couvrante, remarquable en ce que le couvercle comprend une patte électriquement conductrice s'étendant radialement, ladite patte comportant une face de contact destinée à venir en contact avec un deuxième ensemble de stockage adjacent pour connecter électriquement les deux ensembles de stockage.

La patte électriquement conductrice s'étend en saillie radiale de la paroi couvrante. La paroi couvrante est la paroi délimitant une extrémité axiale de l'ensemble de stockage et destiné à recouvrir un élément capacitif et éventuellement un élément tubulaire entourant cet élément capacitif.

Un tel couvercle permet, sans augmenter le nombre d'étapes d'assemblage, de connecter électriquement deux ensembles de stockage d'énergie, tout en obtenant un encombrement minimal pour l'assemblage comprenant les deux ensembles.

Des aspects préférés mais non limitatifs du couvercle selon l'invention sont les suivants :
- le couvercle comprend au moins une paroi latérale essentiellement normale à la paroi couvrante, la patte radiale étant agencée sur cette ou au moins l'une de ces parois latérales.
- le couvercle comprend notamment une jupe périphérique s'étendant à la périphérie de la paroi couvrante et destinée à entourer un élément tubulaire de l'ensemble, la patte étant agencée sur la jupe périphérique,
- il peut également former un disque comprenant la paroi couvrante et destiné à être inséré dans l'élément tubulaire de l'ensemble, la patte radiale étant agencée sur une paroi latérale du disque ;
- la patte électriquement conductrice est distincte des couvercles du deuxième ensemble avant la connexion électrique des deux ensembles de stockage, la face de contact de la patte étant destinée à être connectée avec :
   ∘ le couvercle du deuxième ensemble de stockage, notamment la jupe périphérique du couvercle et/ou
   ∘ l'élément tubulaire du deuxième ensemble de stockage ;
- la face de contact de la patte présente une forme complémentaire du couvercle ou de l'élément tubulaire avec lequel ladite face de contact est destinée à venir en contact. Elle est située à l'extrémité libre radiale de la patte ;
- la face de contact est concave ;
- la patte comprend un berceau sur sa face de contact, le berceau étant destiné à être fixé, par exemple par emboîtement, sur un support du deuxième ensemble de stockage, le berceau et le support ayant des formes complémentaires ;
- le berceau comporte un tenon ou une mortaise, et le support comporte une mortaise ou un tenon ;
- les extrémités de la patte selon la direction normale à la paroi couvrante sont situées entre les extrémités du reste du couvercle selon cette direction, notamment de la paroi latérale du couvercle, telle que la jupe périphérique ou la paroi latérale du disque. En d'autres termes, la hauteur de la patte est inférieure ou égale à la hauteur du couvercle, notamment la hauteur de la paroi latérale telle que la jupe. La hauteur de la patte peut par exemple être égale à la moitié de la hauteur du couvercle, notamment de la jupe ;
- les extrémités de la patte selon au moins une autre direction dans le plan de la paroi couvrante sont situées entre les extrémités de la paroi couvrante selon cette direction. En d'autres termes, la largeur de la patte est inférieure ou égale à la dimension correspondante du couvercle, notamment au diamètre du couvercle. On diminue ainsi l'encombrement de la patte, soit de l'organe permettant de faire la liaison avec l'autre ensemble de stockage et on augmente la capacité du module ;
- la patte et la paroi couvrante s'étendent dans un même plan ;
- la patte s'étend vers l'extérieur à l'extrémité de la paroi latérale opposée à celle liée à la paroi couvrante, notamment à l'extrémité libre de la jupe parallèlement à la paroi couvrante ;

L'invention a également pour objet un ensemble de stockage d'énergie comprenant un élément tubulaire comportant une face latérale et au moins un couvercle destiné à coiffer l'une des extrémités de l'élément tubulaire, le couvercle comprenant une paroi couvrante destinée à recouvrir ladite extrémité de l'élément tubulaire, le couvercle étant selon l'invention.

Cet ensemble de stockage d'énergie peut comprendre un tube comprenant un fond et fermé à une extrémité par un couvercle selon l'invention. L'ensemble de stockage peut également comprendre un tube ouvert à ses deux extrémités et fermé à l'aide d'un couvercle selon l'invention à l'une ou à ses deux extrémités. Les pattes des deux couvercles peuvent alors faire saillie de l'ensemble selon une même direction ou selon deux directions distinctes, par exemple opposées.

Lorsque le couvercle forme un disque tel qu'indiqué ci-dessus, il est destiné à être inséré dans l'élément tubulaire, cet élément pouvant également comprendre une découpe de forme complémentaire de celle de la section de la patte correspondante pour laisser dépasser la patte. Un tel élément peut bien entendu comprendre plusieurs découpes formant un passage pour chaque patte radiale du couvercle correspondant.

Lorsque le couvercle comprend une jupe tel qu'indiqué plus haut, cette jupe est destinée à entourer l'élément tubulaire de l'ensemble.

L'invention comprend également un module comprenant au moins deux ensembles de stockage d'énergie électrique, chaque ensemble de stockage comprenant :
- un élément tubulaire comportant une face dite latérale,
- au moins un couvercle destiné à coiffer l'une des extrémités de l'élément tubulaire, le couvercle comprenant une paroi couvrante destinée à recouvrir ladite extrémité de l'élément tubulaire,
remarquable en ce qu'au moins un des ensembles de stockage est selon l'invention, la patte dudit ou desdits couvercles formant un organe de liaison permettant de connecter électriquement les deux ensembles.

On entend, dans le cadre de la présente invention par « coiffer », le fait d'obturer/fermer l'extrémité de l'élément tubulaire par exemple en :
- recouvrant l'extrémité de l'élément tubulaire avec un couvercle comprenant une jupe annulaire périphérique, le couvercle ayant un diamètre supérieur au diamètre de l'élément tubulaire,
- enfonçant dans l'élément tubulaire, au niveau de son extrémité, un couvercle ayant un diamètre inférieur au diamètre de l'élément tubulaire, les axes de révolution du couvercle et de l'élément tubulaire étant coaxiaux.

L'organe de liaison comprend une ou plusieurs portions, chaque portion étant distincte d'au moins un des ensembles de stockage.

On entend, dans le cadre de la présente invention, par « distinct d'au moins un couvercle », le fait que chaque portion de l'organe de liaison n'est pas d'un seul tenant (i.e. d'une seule pièce) avec les deux couvercles à la fois.

L'organe de liaison s'étend entre les deux ensembles de stockage de sorte que la hauteur de chaque ensemble de stockage connecté à l'organe de liaison est égale à la hauteur d'un ensemble de stockage dépourvu d'organe de liaison (i.e. non connecté à l'organe de liaison). La hauteur de l'ensemble est la dimension de celui-ci selon l'axe de son élément tubulaire.

De préférence, on nomme direction principale la direction reliant les deux ensembles de stockage une fois assemblés, et les ensembles sont configurés pour que l'organe de liaison s'étende entre les ensembles de stockage de sorte que la dimension, selon une direction secondaire, perpendiculaire à la fois à la direction de l'axe et à la direction principale, de chaque ensemble de stockage connecté à l'organe de liaison est égale à la dimension selon cette direction d'un ensemble de stockage dépourvu d'organe de liaison (i.e. non connecté à l'organe de liaison).

Autrement dit, la dimension selon la direction secondaire de l'assemblage des deux ensembles de stockage munis de l'organe de liaison est égale à la dimension selon cette direction de l'ensemble de stockage ayant la plus grande dimension. Dans le cas idéal dans lequel il n'y a pas de dispersion entre les dimensions des ensembles, la dimension de l'assemblage selon cette direction est égale à la dimension d'un ensemble.

De cette façon, on minimise l'encombrement de l'assemblage et on peut maximiser la capacité volumique du module de stockage d'énergie.

Des aspects préférés mais non limitatifs du module selon l'invention sont les suivants :
- l'organe de liaison (notamment la patte d'un couvercle d'un ensemble) est destiné à être en contact avec :
   ∘ le couvercle d'au moins un autre des ensembles de stockage et/ou
   ∘ l'élément tubulaire d'au moins un autre des ensembles de stockage
   pour connecter électriquement l'organe de liaison et l'autre des de stockage ;
- l'organe de liaison comprend au moins une face de contact destinée à venir en contact avec le couvercle ou avec l'élément tubulaire d'au moins l'un des ensembles de stockage, la face de contact présentant une forme complémentaire de la forme du couvercle ou de l'élément tubulaire ;
- l'organe de liaison comprend deux pattes formant chacune une portion de l'organe de liaison, chaque patte étant monobloc avec un couvercle de chaque ensemble, lesdites pattes étant positionnées sur les ensembles de sorte à se superposer lors de la connexion électrique desdits ensembles. Ce mode de réalisation est mis en oeuvre lorsque les deux ensembles assemblés sont selon l'invention. Il permet de faciliter le procédé d'assemblage puisqu'il ne nécessite la mise en oeuvre que d'une seule étape de liaison (entre les deux portions de l'organe de liaison) tout en rendant la liaison plus simple puisque la configuration de la surface de liaison n'est pas imposée par la forme ou la position du couvercle ou de l'élément tubulaire,
- on notera que les pattes des deux ensembles peuvent ne pas avoir la même épaisseur. L'une des pattes formant l'organe de liaison - par exemple la patte la plus éloignée des parois couvrantes des couvercles - peut être plus épaisse que l'autre des pattes formant l'organe de liaison, ce qui peut faciliter la liaison entre les deux pattes quel que soit le type de liaison choisi, notamment lorsque cette liaison est une liaison par soudage, par exemple par soudage par friction malaxage ;
- l'élément tubulaire correspondant peut présenter une découpe de forme complémentaire de la section de la patte, ce qui permet de laisser la patte saillir de l'ensemble et venir en contact avec l'autre ensemble, et ce même lorsqu'il est prévu que le couvercle soit enfoncé à l'intérieur de l'élément tubulaire,
- le couvercle d'au moins un ensemble peut également comprendre une jupe périphérique s'étendant à la périphérie de la paroi couvrante du couvercle et étant destinée à entourer la face latérale de l'élément tubulaire, dans ce cas une patte de l'organe de liaison peut être agencée sur la jupe, et par exemple s'étendre vers l'extérieur, perpendiculairement à la jupe périphérique. On notera que ce mode de réalisation et le précédent peuvent être combinés, la configuration des différents couvercles du module n'étant pas forcément identiques,
- chaque portion de l'organe de liaison, notamment chaque patte radiale, est reliée à l'ensemble dont elle est distincte par soudage, de préférence par soudage par friction malaxage. Ce type de soudure est facile à reconnaître sur la pièce finie puisque la trace de l'outil en rotation à l'interface des deux pièces est visible (la matière s'étant solidifiée de cette façon).

L'invention concerne également un procédé d'assemblage d'un module comportant au moins deux ensembles de stockage d'énergie électrique, chaque ensemble de stockage comprenant :
- un élément tubulaire comportant une face dite latérale,
- au moins un couvercle destiné à coiffer l'une des extrémités de l'élément tubulaire, le couvercle comprenant une paroi couvrante destinée à recouvrir ladite extrémité de l'élément tubulaire,
au moins un ensemble étant selon l'invention, la patte radiale de ou d'au moins l'un des ensembles formant la ou une portion de l'organe de liaison, le procédé étant remarquable en ce qu'il comprend une étape de positionnement et de mise en contact d'au moins une portion d'un organe de liaison, à savoir la patte radiale, ledit organe comprenant au moins une portion, chaque portion étant distincte d'au moins un ensemble, de façon à relier les deux ensembles de stockage pour les connecter électriquement.

L'organe de liaison (composé d'une ou plusieurs pattes radiales de couvercle selon I l'invention) est positionné entre les deux ensembles de stockage de sorte que la hauteur de l'ensemble de stockage connecté à l'organe de liaison est égale à la hauteur d'un ensemble de stockage dépourvu d'organe de liaison.

Autrement dit, le procédé comprend une étape de positionnement et de mise en contact d'une face de contact de la patte radiale du couvercle d'un ensemble selon l'invention avec l'autre ensemble.

Des aspects préférés mais non limitatifs du procédé d'assemblage selon l'invention sont les suivants :
- le procédé comprend en outre une étape de fixation de chaque portion de l'organe de liaison, i.e. chaque patte, de façon à le relier au ou aux ensembles de stockage dont elle est distincte ;
- l'étape de fixation est une étape de soudage, notamment de soudage par friction malaxage,
- si la face de contact du couvercle est concave et est située à l'extrémité libre de la patte, elle est reliée à la paroi latérale de l'autre ensemble,
- si la face de contact du couvercle est située sur une paroi essentiellement parallèle à la paroi couvrante, elle est reliée à une face de contact correspondante d'une patte d'un autre couvercle selon l'invention de l'autre ensemble.

### PRESENTATION DES FIGURES

D'autres caractéristiques, buts et avantages de la présente invention ressortiront encore de la description qui suit, laquelle est purement illustrative et non limitative et doit être lue en regard des dessins annexés sur lesquels :
- la figure 1 illustre un mode de réalisation d'un module de l'art antérieur,
- la figure 2 illustre un exemple de module selon l'invention,
- les figures 3 et 4 illustrent différents exemples de positionnement d'un organe de liaison selon l'invention,
- les figures 5 à 7 illustrent différents modes de réalisation de l'organe de liaison selon l'invention,

### DESCRIPTION DE L'INVENTION

On va maintenant décrire différents modes de réalisation du module selon l'invention en référence aux figures. Dans ces différentes figures, les éléments équivalents du module portent les mêmes références numériques.

Comme illustré à la figure 2, le module 1 comprend un boîtier 10 dans lequel sont disposés au moins deux ensembles de stockage d'énergie électrique 20. Plus précisément, le module comprend trois ensembles de stockages disposés sur plusieurs étages.

Les ensembles de stockage 20 sont de forme globalement cylindrique. Dans d'autres variantes non représentées ici, les ensembles de stockage peuvent être de forme parallélépipédique, cubique, ovale, hexagonale, sans que cela change les principes généraux de l'invention.

Un premier étage 30 du module comprend deux ensembles de stockage 20 disposés côte à côte dans le boîtier 10. Un deuxième étage 40 du module comprend un troisième ensemble de stockage d'énergie 20.

Les axes de révolution A-A' des ensembles de stockage 20 sont parallèles. Dans le mode de réalisation illustré à la figure 2, les ensembles de stockage 20 sont disposés de sorte que leurs axes de révolution A-A' sont perpendiculaires à la paroi inférieure 11 du boîtier 10.

Chaque ensemble de stockage 20 comprend un élément tubulaire 21, et un élément capacitif (non représenté) dans l'élément tubulaire 21.

Le matériau constituant l'élément tubulaire 21 peut être isolant électriquement - par exemple un plastique - ou conducteur électriquement - par exemple un métal tel que de l'aluminium, de l'acier inoxydable, etc.

L'élément tubulaire 21 peut être ouvert à ses deux extrémités, ou comprendre un fond. Dans le mode de réalisation illustré à la figure 2, chaque élément tubulaire 21 comprend deux ouvertures sur ses faces supérieure et inférieure.

Chaque face ouverte de l'élément tubulaire 21 est coiffée par un couvercle 50 connecté électriquement à l'ensemble de stockage d'énergie 20 le long de génératrices de soudure. Le couvercle 50 est électriquement conducteur. Le matériau constituant le couvercle 50 est par exemple un métal tel que de l'aluminium, de l'acier inoxydable, etc.

Chaque couvercle 50 est composé :
∘ d'une paroi couvrante 51, 52 destinée à recouvrir la face supérieure 24 (respectivement la face inférieure 22) de son élément de stockage 20 associé, et
∘ d'une jupe périphérique 53, 54 destinée à entourer en partie la face latérale 23 de l'élément tubulaire 21.

Chaque couvercle 50 peut ou non comprendre un bord périphérique (tel que le bord périphérique 132 illustré sur la figure 1) s'étendant vers l'extérieur parallèlement à l'axe de révolution A-A' de l'ensemble de stockage sur sa face opposée à la jupe périphérique.

Le module comprend également trois organes de liaison 60 qui seront décrits plus en détail dans la suite.

Une particularité du module selon l'invention est que l'organe de liaison 60 et les couvercles 50 sont connectés par soudure au niveau de la jupe 53, 54 de chaque couvercle 50. La technique de soudage peut être par laser transparence ou laser bord à bord ou encore préférentiellement par friction malaxage (ou « FSW » acronyme de l'expression anglo-saxonne « Friction Stir Welding »).

On entend par soudage par laser transparence, le fait de souder deux pièces superposées, par un faisceau d'énergie traversant l'unes des pièces à souder - soit au travers d'une partie amincie de celle-ci, si la pièce est épaisse, soit au travers de toute son épaisseur, si la pièce est mince.

On entend par soudage laser bord à bord, le fait de souder deux pièces positionnées bord à bord par un faisceau d'énergie non traversant, mais ajusté à la forme des bords à souder, et positionné avec précision à l'interface des bords à souder.

L'invention telle que définie dans la présente demande s'applique uniquement au cas où les organes de liaison sont d'un seul tenant avec l'un des couvercles et soudés à l'autre couvercle.

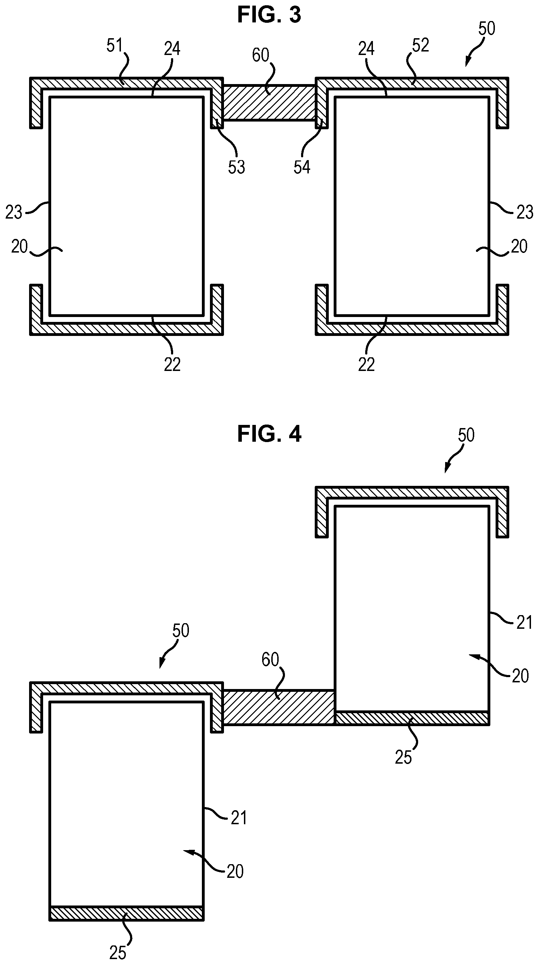

En référence aux figures 3 et 4, on a illustré différents exemples de connexion de deux ensembles de stockage 20 adjacents au moyen d'un organe de liaison 60. Dans ces modes de réalisation, l'organe de liaison 60 est avantageusement positionné entre les ensembles de stockage 20 de sorte que la hauteur de l'ensemble de stockage connecté à l'organe de liaison soit égale à la hauteur d'un ensemble de stockage non connecté à un organe de liaison.

L'organe de liaison 60 est électriquement conducteur. Le matériau constituant l'organe de liaison 60 est par exemple un métal tel que de l'aluminium, du cuivre, etc.

Dans le mode de réalisation illustré à la figure 3, l'organe de liaison 60 est en contact avec les couvercles supérieurs 50 des ensembles de stockage 20 à connecter électriquement. Plus précisément, l'organe de liaison 60 est en contact avec les couvercles 50 au niveau de leurs jupes 53, 54 respectives. Dans le cadre de la présente invention, l'organe de liaison est d'un seul tenant avec la jupe 53, 54 de l'un des couvercles et relié par soudage à l'autre des couvercles.

Ainsi, et contrairement aux modules de l'art antérieur, deux ensembles de stockage 20 adjacents ne sont pas connectés en utilisant une barrette de liaison 131 disposée SUR les couvercles 50, mais en utilisant un organe de liaison 60 disposé ENTRE les couvercles.

Plus précisément, l'organe de liaison 60 est en contact :
- avec les couvercles au niveau de leur jupe périphérique, et/ou
- avec les éléments tubulaires des ensembles de stockage au niveau de leur paroi latérale 23.

Dans le cadre de la présente invention, l'organe de liaison est d'un seul tenant avec un couvercle d'un ensemble et est fixé de façon à être en contact avec le couvercle ou l'élément tubulaire de l'autre ensemble.

Ceci permet de minimiser la hauteur de deux ensembles de stockages adjacents connectés électriquement et donc de maximiser la compacité du module ainsi obtenu.

Lorsque l'organe permet de relier deux extrémités identiques (supérieure ou inférieure) du même ensemble, comme cela est le cas pour les deux ensembles de la figure 3, situés au même étage 30 du module, la hauteur de l'assemblage des deux ensembles est égale à la hauteur de chaque ensemble (dans le cas idéal où les ensembles ont les mêmes dimensions).

Dans le mode de réalisation illustré à la figure 4, l'élément tubulaire 21 de chaque ensemble de stockage 20 comprend un fond 25. Chaque ensemble de stockage 20 comprend un unique couvercle 50 destiné à coiffer la face supérieure ouverte de l'élément tubulaire 21. L'organe de liaison 60 est en contact (dans le cadre de l'invention, d'un seul tenant) avec le couvercle supérieur 50 d'un ensemble de stockage 20 d'une part, et avec la partie inférieure de l'élément tubulaire 21 d'un ensemble de stockage adjacent d'autre part.

Lorsque l'organe permet relier une extrémité supérieure d'un ensemble et l'extrémité inférieure d'un autre ensemble, comme cela est le cas sur la figure 4, pour les ensembles appartenant à deux étages différents 30 ; 40 du module, la hauteur de l'assemblage est inférieure à la somme des hauteurs des ensembles.

On pourrait également envisager d'autres configurations, par exemple dans lesquelles l'organe relie une extrémité d'un ensemble avec une partie médiane d'un autre ensemble.

On notera que l'organe de liaison est configuré dans chacun des cas illustrés ici de sorte l'encombrement de l'assemblage des deux ensembles par le biais de cet organe soit minimal, autant en hauteur qu'en largeur (à savoir selon une direction perpendiculaire à l'axe des ensembles et à la direction reliant ces axes). En effet, l'organe est configuré de sorte que, selon cette direction, la dimension de l'assemblage soit égale à la dimension d'un ensemble, si l'on considère le cas idéal ou tous les ensembles possèdent les mêmes dimensions. Autrement dit, la dimension de l'organe de liaison ne dépasse pas le diamètre de l'ensemble.

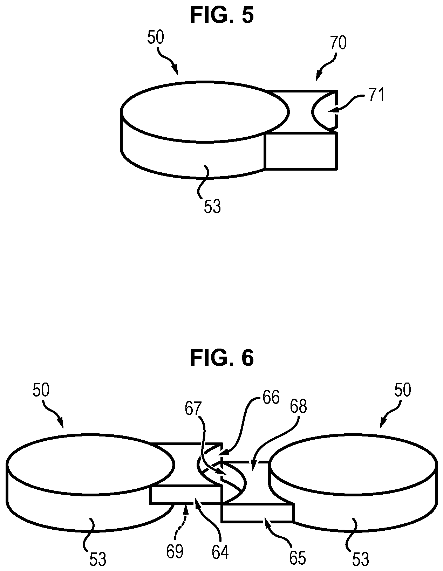

En référence à la figure 5, on a illustré un mode de réalisation de l'organe de liaison 60. Dans ce mode de réalisation, l'organe de liaison 60 et un couvercle 50 sont monoblocs, c'est-à-dire que le couvercle 50 et l'organe de liaison 60 sont réalisés en une seule pièce.

Le couvercle 50 comprend une jupe annulaire périphérique 53 et une patte radiale 70, s'étendant en saillie radiale sur la jupe annulaire périphérique 53 formant l'organe de liaison. La patte radiale 70 comprend quatre faces sensiblement planes et une face de contact 71 opposée au couvercle 50.

La face contact 71 est destinée à venir en contact avec le couvercle 50 ou l'élément tubulaire 21 d'un ensemble de stockage 20 adjacent.

La face de contact 71 peut présenter une forme complémentaire du couvercle 50 ou de l'élément tubulaire 21 avec lequel elle est destinée à venir en contact, telle qu'une forme concave.

Elle présente un profil sensiblement en arc de cercle selon une section parallèle à la face supérieure de l'organe de liaison 60. Ainsi, la face de contact est de forme complémentaire de la jupe du couvercle ou de l'élément tubulaire sur lequel elle est destinée à être fixée et la surface de contact entre l'ensemble et l'organe de liaison est maximisée. Ceci permet d'augmenter la surface de contact entre l'organe de liaison 60 et les ensembles de stockage 20 et donc de réduire la résistance électrique du module.

Pour maximiser cette surface de contact entre l'organe de liaison 60 et les ensembles de stockage 20 tout en minimisant l'encombrement du module :
- la hauteur de chaque face de contact 71 peut être choisie égale à la hauteur h de la jupe 53,54 d'un couvercle 50, et/ou
- la largeur l de l'organe de liaison 60 peut être choisie égale au diamètre de l'élément tubulaire 21 ou du couvercle 50 avec lequel ledit organe est destiné à venir en contact.

Le lecteur appréciera que la (ou les) face(s) de contact de l'organe de liaison peut (peuvent) avoir d'autres profils qu'un profil en arc de cercle.

Par exemple, chaque face de contact de l'organe de liaison 60 peut avoir un profil en queue d'aronde, ou en dent de scie etc.

Par ailleurs, chaque face de contact de l'organe de liaison peut comprendre un berceau de forme mâle (respectivement femelle) destiné à être fixé sur un support de forme femelle (respectivement mâle) de l'ensemble de stockage.

Ceci permet de fixer mécaniquement l'organe de liaison sur l'ensemble de stockage, soit par emboîtement, soit par clipsage, soit par un autre type de fixation mécanique connue de l'homme du métier. Par exemple, le berceau de la face de contact peut comprendre un tenon (respectivement une mortaise) et le support de l'ensemble de stockage peut comprendre une mortaise (respectivement un tenon).

En référence à la figure 6, on a illustré un autre mode de réalisation de l'organe de liaison. Dans ce mode de réalisation, chaque couvercle 50 comprend une patte radiale 64, 65 s'étendant vers l'extérieur de la jupe annulaire périphérique 53, parallèlement à la face supérieure du couvercle. La patte radiale de chaque couvercle forme une portion de l'organe de liaison. Chacune des pattes 64, 65 comprend une face de contact 66, 67 concave opposée au couvercle 50. Cette face de contact 66, 67 est destinée à venir en contact avec le couvercle d'un ensemble de stockage adjacent. La hauteur de la patte radiale est Inférieure ou égale à la moitié de la hauteur de la jupe.

Un premier type de couvercle comprend une patte radiale 64 affleurant (i.e. s'étendant dans le prolongement de) la paroi couvrante du couvercle 50.

Un deuxième type de couvercle comprend une patte radiale 65 s'étendant à l'extrémité libre de la jupe annulaire périphérique 53, parallèlement à la paroi couvrante 51, 52 du couvercle 50. Ainsi, les formes des deux types de couvercles sont complémentaires. Pour connecter électriquement deux ensembles de stockage adjacents, on utilise un couvercle du premier type sur l'un des deux ensembles de stockage, et un couvercle du deuxième sur l'autre ensemble de stockage. Ces couvercles sont positionnés de sorte que les pattes radiales des couvercles du premier et du deuxième type se superposent, la surface inférieure 69 de la patte supérieure 64 reposant sur la surface supérieure 68 de la patte inférieure 65.

Le fait de superposer les pattes radiales permet de faciliter l'opération de soudure. Avantageusement, les pattes radiales 64, 65 peuvent être soudées ensemble, au niveau des surfaces 68, 69.

On notera que l'épaisseur de la patte Inférieure 65 est de préférence supérieure à celle de la patte supérieure 64. Elle peut en effet former dans ce cas un support permettant le soudage des pattes 64, 65, sans endommager l'organe de liaison.

Ceci permet de maximiser la surface d'échange entre les deux pattes radiales 64, 65 et ainsi de minimiser la résistance électrique de l'organe de liaison.

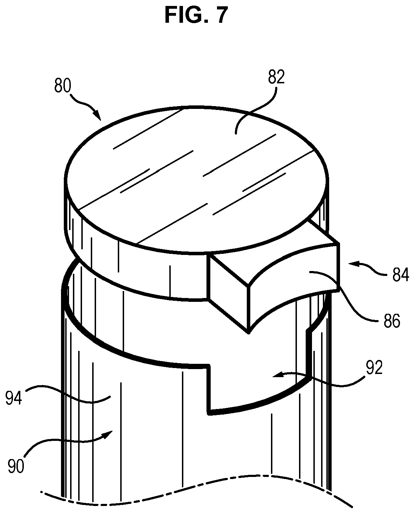

On a également représenté une autre variante de réalisation de l'invention à la figure 7. Sur cette figure, le couvercle 80 est de forme différente de tout ce qui a été décrit auparavant. En effet, le couvercle est formé d'un disque essentiellement plan 82 et ne comprend pas de jupe périphérique. Le disque 82 est de dimensions inférieures à celles de l'extrémité de l'élément tubulaire 90 et il est donc inséré dans l'élément tubulaire de sorte que la face supérieure du couvercle 80 affleure avec l'extrémité de l'élément tubulaire.

Le couvercle comprend également une patte radiale 84 de hauteur égale à celle du disque 82. La patte 84 comprend une face de contact 86 destinée à être reliée à un deuxième ensemble, comme cela a été décrit auparavant.

On remarque également que l'élément tubulaire 90 comprend une découpe 92 dans sa paroi latérale 94, permettant à la patte radiale de saillir de l'élément tubulaire 90 et de connecter l'ensemble à un deuxième ensemble adjacent.

On notera que la forme de couvercle décrite en référence à la figure 7 peut être adoptée même lorsque l'élément tubulaire ne comprend pas de découpe. Dans ce cas, le couvercle est posé sur l'extrémité de l'élément tubulaire.

En résumé et en référence aux figures 5 à 7, l'organe de liaison peut être réalisé en une (figures 5 ou 7) ou deux parties (figure 6), l'une et/ou l'autre de ces parties étant d'un seul tenant avec l'un des couvercles.

Toutefois, quelque soit la configuration de l'organe de liaison, celui-ci n'est jamais d'un seul tenant avec deux couvercles à la fois. Ceci permet d'améliorer la flexibilité d'assemblage du module.

On va maintenant décrire plus en détail un exemple de procédé.

Dans le cas où l'élément tubulaire 21 ne comprend pas de fond, un couvercle 50 est disposé sur une des faces de l'élément tubulaire.

Un élément capacitif 80 est positionné à l'intérieur de l'élément tubulaire 21. Un couvercle 50 est placé sur l'extrémité ouverte de l'élément tubulaire puis, une fois l'étanchéité de la liaison élément tubulaire 21- couvercle 50 assurée, l'électrolyte est introduite dans l'élément tubulaire.

On obtient ainsi un premier ensemble de stockage d'énergie électrique. Ces étapes sont répétées pour obtenir le nombre d'ensemble de stockage désirés pour le module. Au moins l'un des couvercles de chaque ensemble comprend une patte radiale formant un organe de liaison tel que décrit à la figure 5.

Dans une étape du procédé d'assemblage, deux ensembles de stockage d'énergie sont positionnés côte à côte.

L'organe de liaison 60 est mis en contact avec la jupe de l'ensemble de stockage d'énergie 20 dont elle est distincte pour connecter électriquement cet ensemble à l'ensemble avec lequel l'organe est d'un seul tenant. Avantageusement, l'organe de liaison est positionné de sorte que la hauteur de l'ensemble de stockage connecté à l'organe de liaison soit égale à la hauteur d'un ensemble de stockage non connecté à l'organe de liaison.

L'organe de liaison est fixé sur les deux ensembles de stockage, dans l'invention, en reliant la patte du couvercle formant organe de liaison, au niveau de sa surface de contact, à l'autre ensemble de stockage. Cette fixation peut être obtenue par collage, par vissage, par soudage ou par emboîtement de pièces complémentaires prévues sur les couvercles et sur l'organe de liaison. Le soudage, notamment le soudage par friction malaxage, constitue le mode de réalisation préférentiel car il permet un meilleur passage du courant.

Ces différentes étapes peuvent être répétées pour connecter électriquement une pluralité d'ensembles de stockage afin de réaliser des modules présentant des propriétés différentes en fonction de l'application visée, tel que cela est par exemple représenté sur la figure 2.

L'assemblage d'un module en utilisant l'organe de liaison décrit ci-dessus présente de nombreux avantages :
- les différentes configurations de l'organe de liaison permettent une bonne flexibilité de l'assemblage de deux ensembles de stockage adjacents, à différentes hauteurs et à différents angles, puisque l'organe de liaison n'est pas d'un seul tenant avec les couvercles des deux ensembles de stockage ;
- l'assemblage de deux ensembles de stockage peut être réalisé à partir de pièces standard quelle que soit la configuration d'assemblage des ensembles de stockage adjacents (ensembles de stockages positionnés à des étages différents et/ou avec des angles différents etc.) ;
- les pièces utilisées pour l'assemblage étant de forme simple et standard, les coûts de fabrication de ceux-ci (et par conséquent du module) sont faibles ;
- les organes de liaison permettent de maximiser la compacité du module.

Le fait qu'ils soient intégrés au couvercle permet de simplifier le procédé d'assemblage qui ne nécessite qu'une unique étape de liaison des ensembles entre eux ;
- l'utilisation d'organe de liaison permet également une meilleure évacuation thermique ; en effet, dans les modules de l'art antérieur où une barrette est superposée au couvercle, la chaleur ne s'évacue que par les cordons de soudure reliant la barrette au couvercle ; au contraire, avec l'utilisation d'organe de liaison, la chaleur s'évacue par toute la face supérieure du couvercle qui est directement en contact avec l'air ambiant ;
- enfin, l'utilisation d'un organe de liaison selon l'invention permet de diminuer la résistance du module, la distance parcourue par le courant électrique dans un module selon l'invention étant inférieure à la distance parcourue par le courant électrique dans un module dont les ensembles sont reliés avec une barrette de connexion superposée au couvercle.

Le lecteur aura compris que de nombreuses modifications peuvent être apportées au procédé et au dispositif décrits précédemment sans sortir matériellement des nouveaux enseignements et des avantages décrits ici.

Notamment, l'élément tubulaire, le couvercle ou l'organe de liaison peut présenter d'autres formes que celles illustrées dans les figures. Par exemple l'organe de liaison peut être une tige ou peut comprendre une face de contact de forme non complémentaire des formes de l'ensemble.

Par conséquent, toutes les modifications de ce type entrent dans la portée de l'invention telle que définie dans les revendications jointes.

## Revendications

1. Couvercle destiné à coiffer un élément tubulaire d'un premier ensemble de stockage d'énergie électrique (20), le couvercle comprenant une paroi couvrante (51, 52, 82) et au moins une paroi latérale (53, 54) essentiellement normale à la paroi couvrante, **caractérisé en ce que** le couvercle comprend une patte radiale (70, 84, 64, 65) électriquement conductrice s'étendant radialement sur au moins une des parois latérales du couvercle, la patte radiale comportant une face de contact (66, 67, 71, 86) de forme complémentaire du couvercle ou de l'élément tubulaire avec lequel ladite face de contact est destinée à venir en contact, et **en ce que** la face de contact est située à une extrémité libre radiale de la patte.

2. Couvercle selon la revendication précédente, comprenant également une jupe périphérique (53, 54) s'étendant à la périphérie de la paroi couvrante, la patte radiale (70) étant agencée sur la jupe périphérique.

3. Couvercle selon la revendication 1, formant un disque (82) comprenant la paroi couvrante, la patte radiale (84) étant agencée sur une paroi latérale du disque.

4. Couvercle selon l'une quelconque des revendications précédentes, dans lequel la face de contact (71, 86, 66, 67) de la patte radiale est située à l'extrémité libre de la patte radiale et présente une forme complémentaire du couvercle ou de l'élément tubulaire avec lequel ladite face de contact est destinée à venir en contact.

5. Couvercle selon la revendication précédente, dans lequel la face de contact (67, 68, 71, 86) est concave.

6. Couvercle selon l'une quelconque des revendications précédentes, dans lequel la patte radiale comprend, sur sa face de contact, un berceau destiné à être fixé, par exemple par emboîtement, sur un support de forme complémentaire d'un ensemble de stockage.

7. Module selon la revendication précédente, dans lequel le berceau comporte un tenon ou une mortaise, et est destiné à coopérer avec un support comportant une mortaise ou un tenon.

8. Couvercle selon l'une quelconque des revendications précédentes, dans lequel les extrémités de la patte radiale selon la direction normale à la paroi couvrante sont situées entre les extrémités du reste du couvercle selon cette direction.

9. Couvercle selon l'une quelconque des revendications précédentes, dans lequel les extrémités de la patte radiale selon au moins une autre direction dans le plan de la paroi couvrante sont situées entre les extrémités de la paroi couvrante selon cette direction.

10. Ensemble de stockage d'énergie, comprenant un élément tubulaire (21, 90) comportant une face latérale (23, 94) et au moins un couvercle (50, 80) destiné à coiffer l'une des extrémités de l'élément tubulaire, le couvercle comprenant une paroi couvrante (51, 52, 82) destinée à recouvrir ladite extrémité de l'élément tubulaire, le couvercle étant selon l'une quelconque des revendications précédentes.

11. Ensemble selon la revendication précédente, dans lequel le couvercle (80) est selon la revendication 3 et est destiné à être inséré dans l'élément tubulaire, l'élément tubulaire comprenant une découpe (92) de forme complémentaire de celle de la section de la patte radiale (84) dans sa paroi latérale (94) pour laisser dépasser la patte radiale.

12. Ensemble selon la revendication 10, dans lequel le couvercle (50) est selon la revendication 2, la jupe périphérique (53, 54) étant destinée à entourer la face latérale (23) de l'élément tubulaire (21).

13. Module comprenant au moins deux ensembles de stockage d'énergie électrique (20), chaque ensemble de stockage comprenant :
- un élément tubulaire (21, 90) comportant une face dite latérale (23, 94),
- au moins un couvercle (50, 80) destiné à coiffer l'une des extrémités de l'élément tubulaire, le couvercle comprenant une paroi couvrante (51, 52, 82) destinée à recouvrir ladite extrémité de l'élément tubulaire,
**caractérisé en ce qu'**au moins un des ensembles est selon l'une des revendications 10 à 12, la ou l'au moins une des pattes radiales (70, 64, 65, 84) dudit ou desdits couvercles formant un organe de liaison permettant de connecter électriquement les deux ensembles.

14. Module selon la revendication précédente, dans lequel le ou les ensembles de stockage sont configurés de sorte que l'organe de liaison s'étende entre les deux ensembles de stockage de sorte que la hauteur de chaque ensemble de stockage connecté à l'organe de liaison est égale à la hauteur d'un ensemble de stockage dépourvu d'organe de liaison.

15. Module selon l'une des revendications 13 ou 14, dans lequel la patte radiale d'un couvercle (70, 86, 64, 65) d'un ensemble de stockage est destinée à être en contact avec :
- le couvercle d'au moins un autre des ensembles de stockage (20) et/ou
- l'élément tubulaire (21) d'au moins un autre des ensembles de stockage (20)
pour connecter électriquement la patte radiale et l'autre des ensembles de stockage.

16. Module selon l'une quelconque des revendications 13 et 15, dans lequel les deux ensembles de stockage sont selon l'une des revendications 10 à 12, et dans lequel l'organe de liaison comprend deux pattes radiales (64, 65) formant chacune une portion de l'organe de liaison, chaque patte radiale étant monobloc avec un couvercle de chaque ensemble respectif, lesdites pattes radiales étant positionnées sur les ensembles de sorte à se superposer lors de la connexion électrique desdits ensembles.

17. Module selon la revendication précédente, dans lequel l'une (65) des pattes radiales formant l'organe de liaison est plus épaisse que l'autre (64) des pattes radiales formant l'organe de liaison.

18. Module selon l'une quelconque des revendications 14 à 17, dans lequel chaque portion de l'organe de liaison est reliée à l'ensemble dont elle est distincte par soudage, de préférence soudage par friction malaxage.

19. Procédé d'assemblage d'un module comportant au moins deux ensembles de stockage d'énergie électrique, chaque ensemble de stockage comprenant :
- un élément tubulaire (21, 90) comportant une face dite latérale (23, 94),
- au moins un couvercle (50, 80) destiné à coiffer l'une des extrémités de l'élément tubulaire, le couvercle (50, 80) comprenant une paroi couvrante (51, 52, 82) destinée à recouvrir ladite extrémité de l'élément tubulaire,
dans lequel au moins un ensemble est selon l'une quelconque des revendications 10 à 12, la patte radiale d'un couvercle de l'ensemble formant la ou une portion d'organe de liaison,
**caractérisé en ce qu'**il comprend une étape (300) de positionnement de la ou des portions d'un organe de liaison, de façon à relier les deux ensembles de stockage pour les connecter électriquement.

20. Procédé selon la revendication précédente, lequel comprend en outre une étape de fixation de chaque portion de l'organe de liaison de façon à la relier à l'ensemble de stockage dont elle est distincte.

21. Procédé selon la revendication précédente, dans lequel l'étape de fixation est une étape de soudage, notamment de soudage par friction malaxage.

## Patentansprüche

1. Abdeckung, die dazu bestimmt ist, ein röhrenförmiges Element einer ersten elektrischen Energiespeichervorrichtung (20) zu bedecken, wobei die Abdeckung eine Abdeckwand (51, 52, 82) und mindestens eine Seitenwand (53, 54) umfasst, die im Wesentlichen normal zu der Abdeckwand ist, **dadurch gekennzeichnet, dass** die Abdeckung eine elektrisch leitfähige radiale Lasche (70, 84, 64, 65) umfasst, die sich radial über mindestens eine der Seitenwände der Abdeckung erstreckt, wobei die radiale Lasche eine Kontaktfläche (66, 67, 71, 86) mit einer Form, die sich mit derjenigen der Abdeckung oder des röhrenförmigen Elements, mit der/dem die Kontaktfläche bestimmt ist, in Kontakt zu kommen, ergänzt, und dadurch, dass die Kontaktfläche sich an einem radialen freien Ende der Lasche befindet.

2. Abdeckung nach dem vorhergehenden Anspruch, die auch eine umlaufende Schürze (53, 54) umfasst, die sich am Umfang der Abdeckwand erstreckt, wobei die radiale Lasche (70) auf der umlaufenden Schürze angeordnet ist.

3. Abdeckung nach Anspruch 1, die eine Scheibe (82) bildet, die die Abdeckwand umfasst, wobei die radiale Lasche (84) auf einer Seitenwand der Scheibe angeordnet ist.

4. Abdeckung nach einem der vorhergehenden Ansprüche, wobei die Kontaktfläche (71, 86, 66, 67) der radialen Lasche sich am freien Ende der radialen Lasche befindet und eine Form aufweist, die sich mit derjenigen der Abdeckung oder des röhrenförmigen Elements ergänzt, mit der/dem die Kontaktfläche bestimmt ist, in Kontakt zu kommen.

5. Abdeckung nach dem vorhergehenden Anspruch, wobei die Kontaktfläche (67, 68, 71, 86) konkav ist.

6. Abdeckung nach einem der vorhergehenden Ansprüche, wobei die radiale Lasche auf ihrer Kontaktfläche eine Halterung umfasst, die dazu bestimmt ist, zum Beispiel durch Ineinanderstecken, auf einer Unterstützung mit ergänzender Form einer Speichervorrichtung befestigt zu werden.

7. Modul nach dem vorhergehenden Anspruch, wobei die Halterung einen Zapfen oder ein Zapfenloch umfasst und dazu bestimmt ist, mit einer Unterstützung zusammenzuwirken, die ein Zapfenloch oder einen Zapfen umfasst.

8. Abdeckung nach einem der vorhergehenden Ansprüche, wobei die Enden der radialen Lasche in der Richtung normal zur Abdeckwand sich zwischen den Enden des Rests der Abdeckung in dieser Richtung befinden.

9. Abdeckung nach einem der vorhergehenden Ansprüche, wobei die Enden der radialen Lasche in mindestens einer anderen Richtung in der Ebene der Abdeckwand sich zwischen den Enden der Abdeckwand in dieser Richtung befinden.

10. Energiespeichervorrichtung, die ein röhrenförmiges Element (21, 90) umfasst, das eine Seitenfläche (23, 94) und mindestens eine Abdeckung (50, 80) umfasst, die dazu bestimmt ist, eines der Enden des röhrenförmigen Elements zu bedecken, wobei die Abdeckung eine Abdeckwand (51, 52, 82) umfasst, die dazu bestimmt ist, das Ende des röhrenförmigen Elements abzudecken, wobei die Abdeckung nach einem der vorhergehenden Ansprüche ist.

11. Vorrichtung nach dem vorhergehenden Anspruch, wobei die Abdeckung (80) nach Anspruch 3 ist und dazu bestimmt ist, in das röhrenförmige Element eingesetzt zu werden, wobei das röhrenförmige Element einen Ausschnitt (92) mit einer Form umfasst, die sich mit derjenigen des Abschnitts der radialen Lasche (84) in ihrer Seitenwand (94) ergänzt, um die radiale Lasche hinausragen zu lassen.

12. Vorrichtung nach Anspruch 10, wobei die Abdeckung (50) nach Anspruch 2 ist, wobei die umlaufende Schürze (53, 54) dazu bestimmt ist, die Seitenfläche (23) des röhrenförmigen Elements (21) zu umgeben.

13. Modul, das mindestens zwei elektrische Energiespeichervorrichtungen (20) umfasst, wobei jede Speichervorrichtung Folgendes umfasst:
- ein röhrenförmiges Element (21, 90), das eine sogenannte Seitenfläche (23, 94) umfasst,
- mindestens eine Abdeckung (50, 80), die dazu bestimmt ist, eines der Enden des röhrenförmigen Elements zu bedecken, wobei die Abdeckung eine Abdeckwand (51, 52, 82) umfasst, die dazu bestimmt ist, das Ende des röhrenförmigen Elements abzudecken,
**dadurch gekennzeichnet, dass** mindestens eine der Vorrichtungen nach einem der Ansprüche 10 bis 12 ist, wobei die oder die mindestens eine von den radialen Laschen (70, 64, 65, 84) der Abdeckung oder Abdeckungen ein Verbindungsorgan bildet/bilden, das das elektrische Verbinden der zwei Vorrichtungen ermöglicht.

14. Modul nach dem vorhergehenden Anspruch, wobei die Speichervorrichtung oder Speichervorrichtungen derart ausgestaltet ist oder sind, dass das Verbindungsorgan sich derart zwischen den zwei Speichervorrichtungen erstreckt, dass die Höhe von jeder mit dem Verbindungsorgan verbundenen Speichervorrichtung gleich der Höhe einer Speichervorrichtung ohne Verbindungsorgan ist.

15. Modul nach einem der Ansprüche 13 oder 14, wobei die radiale Lasche einer Abdeckung (70, 86, 64, 65) einer Speichervorrichtung dazu bestimmt ist, mit Folgendem in Kontakt zu sein:
- der Abdeckung von mindestens einer anderen von den Speichervorrichtungen (20) und/oder
- dem röhrenförmigen Element (21) von mindestens einer anderen von den Speichervorrichtungen (20),
um die radiale Lasche und die andere von den Speichervorrichtungen elektrisch zu verbinden.

16. Modul nach einem der Ansprüche 13 und 15, wobei die zwei Speichervorrichtungen nach einem der Ansprüche 10 bis 12 sind und wobei das Verbindungsorgan zwei radiale Laschen (64, 65) umfasst, die jeweils einen Abschnitt des Verbindungsorgans bilden, wobei jede radiale Lasche aus einem Stück mit einer Abdeckung von jeder jeweiligen Vorrichtung ist, wobei die radialen Laschen derart auf den Vorrichtungen positioniert sind, dass sie sich bei der elektrischen Verbindung der Vorrichtungen überlagern.

17. Modul nach dem vorhergehenden Anspruch, wobei die eine (65) von den radialen Laschen, die das Verbindungsorgan bilden, dicker ist als die andere (64) von den radialen Laschen, die das Verbindungsorgan bilden.

18. Modul nach einem der Ansprüche 14 bis 17, wobei jeder Abschnitt des Verbindungsorgans mit der Vorrichtung, von der er sich unterscheidet, durch Schweißen, vorzugsweise durch Rührreibschweißen, verbunden ist.

19. Verfahren zum Zusammenbauen eines Moduls, das mindestens zwei elektrische Energiespeichervorrichtungen umfasst, wobei jede Speichervorrichtung Folgendes umfasst:
- ein röhrenförmiges Element (21, 90), das eine sogenannte Seitenfläche (23, 94) umfasst,
- mindestens eine Abdeckung (50, 80), die dazu bestimmt ist, eines der Enden des röhrenförmigen Elements zu bedecken, wobei die Abdeckung (50, 80) eine Abdeckwand (51, 52, 82) umfasst, die dazu bestimmt ist, das Ende des röhrenförmigen Elements abzudecken,
wobei mindestens eine Vorrichtung nach einem der Ansprüche 10 bis 12 ist, wobei die radiale Lasche einer Abdeckung der Vorrichtung den oder einen Verbindungsorganabschnitt bildet,
**dadurch gekennzeichnet, dass** es einen Schritt (300) zum Positionieren des Abschnitts oder der Abschnitte eines Verbindungsorgans umfasst, derart, dass die zwei Speichervorrichtungen aneinander angeschlossen werden, um sie elektrisch zu verbinden.

20. Verfahren nach dem vorhergehenden Anspruch, das ferner einen Schritt zum Befestigen von jedem Abschnitt des Verbindungsorgans umfasst, derart, dass es an die Speichervorrichtung, von der es sich unterscheidet, angeschlossen wird.

21. Verfahren nach dem vorhergehenden Anspruch, wobei der Schritt zum Befestigen ein Schritt zum Schweißen, insbesondere durch Rührreibschweißen, ist.

## Claims

1. A cover intended to cap a tubular element of a first electrical energy storage assembly (20), the cover comprising a covering wall (51, 52, 82) and at least one side wall (53, 54) essentially normal to the covering wall, **characterized in that** the cover comprises an electrically conductive radial tongue (70, 84, 64, 65) extending radially on at least one of the side walls of the cover, the radial tongue having a contact face (66, 67, 71, 86) of a shape matching the cover or the tubular element with which said contact face is intended to come into contact and **in that** the contact face is located at a free radial end of the tongue.

2. The cover according to the preceding claim also comprising a peripheral skirt (53, 54) extending over the periphery of the covering wall, the radial tongue (70) being arranged on the peripheral skirt.

3. The cover according to claim 1 forming a disc (82) comprising the covering wall, the radial tongue (84) being arranged on a side wall of the disc.

4. The cover according to any one of the preceding claims wherein the contact face (71, 86, 66, 67) of the radial tongue is located at the free end of the radial tongue and is of a shape matching the cover or the tubular element with which said contact face is intended to come into contact.

5. The cover according to the preceding claim wherein the contact face (67, 68, 71, 86) is concave.

6. The cover according to any one of the preceding claims wherein the radial tongue, on its contact face, comprises a cradle intended to be secured, e.g. by interlocking, onto a support whose shape mates with a storage assembly.

7. The cover according to the preceding claim wherein the cradle comprises a tenon or mortise and is intended to cooperate with a support having a mortise or a tenon.

8. The cover according to any one of the preceding claims wherein the ends of the radial tongue in a direction normal to the covering wall are located between the ends of the remainder of the cover in this direction.

9. The cover according to any one of the preceding claims wherein the ends of the radial tongue in at least one other direction along the plane of the covering wall are located between the ends of the covering wall in this direction.

10. An energy storage assembly comprising a tubular element (21, 90) having a side face (23, 94) and at least one cover (50, 80) intended to cap one of the ends of the tubular element, the cover comprising a covering wall (51, 52, 82) intended to cover said end of the tubular element, the cover being a cover according to any one of the preceding claims.

11. The assembly according to the preceding claim wherein the cover (80) is according to claim 3 and is intended to be inserted in the tubular element, the tubular element comprising a cut-out (92) whose shape matches the shape of the cross-section of the radial tongue (84) in its side wall (94) to allows the radial tongue to pass.

12. The assembly according to claim 10 wherein the cover (50) is according to claim 2, the peripheral skirt (53, 54) being intended to surround the side face (23) of the tubular element (21).

13. A module comprising at least two electrical energy storage assemblies (20), each storage assembly comprising:
- a tubular element (21, 90) having a so-called side face (23, 94);
- at least one cover (50, 80) intended to cap one of the ends of the tubular element, the cover comprising a covering wall (51, 52, 82) intended to cover said end of the tubular element,
**characterized in that** at least one of the assemblies is according to one of claims 10 to 12, the or at least one of the radial tongues (70, 64, 65, 84) of said cover or covers forming a connecting body allowing the electrical connection of the two assemblies.

14. The module according to the preceding claim wherein the storage assembly or assemblies are configured so that the connecting body extends between the two storage assemblies so that the height of each storage assembly connected to the connecting body is equal to the height of a storage assembly not connected to a connecting body.

15. The module according to one of claims 13 or 14 wherein the radial tongue of a cover (70, 86, 64, 65) of a storage assembly is intended to be in contact with:
- the cover of at least one other of the storage assemblies (20) and/or
- the tubular element (21) of at least one other of the storage assembles (20)
for the electrical connecting of the radial tongue with the other of the storage assemblies.

16. The module according to any one of claims 13 and 15 wherein the two storage assemblies are according to one of claims 10 to 12, and wherein the connecting body comprises two radial tongues (64, 65) each forming a portion of the connecting body, each radial tongue being in a single piece with a cover of each respective assembly, said radial tongues being positioned on the assemblies so that they are superimposed during the electrical connecting of said assemblies.

17. The module according to the preceding claim wherein one (65) of the radial tongues forming the connecting body is thicker than the other (64) of the radial tongues forming the connecting body.

18. The module according to any of claims 14 to 17 wherein each portion of the connecting body is connected to the assembly from which it is separate, via welding, preferably via friction stir welding.

19. A method for assembling a module comprising at least two electrical energy storage assemblies, each storage assembly comprising:
- a tubular element (21, 90) having a so-called side face (23, 94);
- at least one cover (50, 80) intended to cap one of the ends of the tubular element, the cover (50, 80) comprising a covering wall (51, 52, 82) intended to cover said end of the tubular element,
wherein at least one assembly is according to any one of claims 10 to 12, the radial tongue of a cover of the assembly forming the or one portion of connecting body,
**characterized in that** it comprises a step (300) to position the portion or portions of a connecting body so as to join the two storage assemblies for the electrical connection thereof.

20. The method according to the preceding claim which further comprises a securing step of each portion of the connecting body for the connecting thereof with the storage assembly from which it is separate.

21. The method according to the preceding claim wherein the securing step is a welding step, in particular a friction stir welding step.
